# EUROPEAN PATENT APPLICATION

(11) **EP 2 090 678 A1**
(43) Date of publication of application: **19.08.2009**
(21) Application number: 07823038.0
(22) Date of filing: 08.11.2007
(51) Int. Cl.: C25B 11/02, C25B 1/06, C25B 3/02

(54) **REACTOR FOR THE ELECTROCHEMICAL TREATMENT OF BIOMASS**

(30) Priority: 08.11.2006 ES 200602843
(71) Applicant: Consejo Superior De Investigaciones Cientificas, 28006 Madrid (ES); Knowledge Valley, S.L., 24006 Leon (ES)
(72) Inventor: GUINEA DÍAZ, Domingo, 28500 Madrid (ES); GARCIA FIERRO, Jose Luis, 28049 Cantoblanco (Madrid) (ES); NAVARRO YERGA, Rufino Manuel, 28049 Cantoblanco (Madrid) (ES); JURADO EGEA, José Ramón, 28049 Madrid (ES); RODRIGUEZ RODRIGUEZ, Helí Ricardo, 24006 Leon (ES)
(74) Representative: Ungria Lopez, Javier
(86) International application number: PCT/ES2007/000633
(87) International publication number: WO 2008/056012

(57) **Abstract**

The invention relates to a reactor for the electrochemical treatment of biomass, including at least two flat surface electrodes positioned equidistantly over the entire surface and separated by less than 1 mm, the space between said electrodes being occupied by a electrolytic solution. Preferably, at least one of the electrodes is an anode and at least one of the electrodes is a cathode. The anode is preferably made from a material selected from among vanadium, selenium, gold, silver, nickel, graphite, graphite galvanised with platinum and graphite galvanised with palladium. The invention also relates to the use of said reactor in electrooxidation reactions involving biomass, particularly polysaccharides, in the production of organic compounds, water electrolysis, hydrogen production or the production of electrochemical cells.

## Description

### Field of the invention

The present invention relates to the field of chemistry and specifically, to the field of electrochemical treatment of biomass.

### Background of the invention

There are several types of reactors in the state of the art well known for being used in electrochemical reactions. An organic electrolysis reactor for performing an electrolytic oxidation reaction is described, for example, in US6695963. This reactor comprises a casing, an anode, a cathode and means for applying a voltage disposed in the outside of the casing; and wherein the anode and the cathode are disposed in the casing leaving an intermediate compartment between them and a compartment on the outside of the anode.

US4404082 describes a bipolar electrode for anodic processes in undivided cells. More specifically, it describes bipolar electrodes of graphite or glassy carbon, which are provided on the cathode side with metal nets of a material reducing the hydrogen overvoltage, such as Ni, Ti, Cu, steel or brass and wherein a spacer made of insulating material is inserted between the metal nets and the next anode.

US2001/0042682 divulges an electrochemical cell that comprises several electrodes. The anodes are rectangular and they arc covered with Ti-fiber, The cathodes are placed between them. Said cathodes are rectangular as well and have the same dimensions as the anodes, Between the anodes and the cathodes are disposed separation means such as one or more layers of a plastic coated fiberglass mesh (3.5 threads per centimetre). The anodes consist of a titanium metal substrate with a multilayer metal oxide coating.

Another document related to electrolyte cells and a method of producing gasses with high gas purities is WO2004/015172. The apparatus includes two or more tubular electrodes, at least one of which is an inner electrode located in at least one outer electrode; and a separator interposed between the inner and outer electrodes and substantially coextensive therewith.

Besides, US6607655 describes a reactor for carrying out electrochemical reactions comprising at least one electrode and a counter-electrode which are separated by a capillary gap having at least one channel with a height less than or equal to 0.2 mm and a width less than or equal to 10 mm that serves as a reaction space. In the capillary gap between the electrodes there is an isolating layer that possesses several recesses or slots for forming or creating the mentioned channel. With this disposition it is possible to minimize the voltage required in the electrolysis. Moreover, it is known that high ohmic resistance requires the use of conductive salts, whereas with the reactor disclosed in this document, which promotes laminar flow conditions, it is possible to reduce said ohmic resistance and to optimize the reaction parameters.

Patent DE19537828 describes an electrolytic reactor for the treatment of industrial waste water comprising electrode plates arranged in parallel, between which there is a channel to force the waste water flow. This channel is a closed channel in its longitudinal extension. The electrode plates that form the channel are separated by elastic spacers made of insulating material. This disposition of the reactor devices prevents the gases generated by the electrolysis reaction -usually H₂ and O₂-from producing bubbles immediately over a surface, and therefore losing the reaction products, but they are conducted through the channel disposed between the electrodes. This allows achieving the longest possible circulation and reaction time between the gases and the substances contained in the waste water that is to be treated, giving as a result an optimal efficacy level. The conduction channel has a height from 5 mm to 10 mm, a width from 50 mm to 250 mm and a length from 50 m to 300 m. This means that the electrodes may be separated by a distance of at least 5 mm. The elements for maintaining the distance between electrodes can be made of rubber or elastic plastic. The gas in form of bubbles ascends reaching consecutive levels of the waste water circulating through the channel, avoiding that the gas leave the channel with the mentioned effect on efficacy.

US4670113 describes an electrolytic cell for the gasification and combined gasification and liquefaction of carbonic material by utilizing electrochemically generated atomic hydrogen to activate the reaction between the ions of dissociated water and that material. The cell comprises two cylindrical and concentric electrodes whose intermediate space is devoid of any membrane, so as to permit a free communication of the reaction components throughout the electrolyte. The space distance between the electrodes can be equal to or less than 1/16 inches (until 0.04 mm). This document also discloses an embodiment wherein both electrodes are flat-parallel plates, but in this case the space distance between them is comprised between 1 and 1.5 inches (approximately between 2.3 cm and 3.5 cm).

Nevertheless, it is unknown, in the state of the art, a reactor for an electrochemical process wherein the electrodes do not require any separating element between them coextensive with the whole surface of the electrodes, and wherein the electrodes are flat-parallel plates, in a sandwich disposition, separated by a distance of less than 1 mm. In the reactor of the present invention, the only elements that separate the electrodes are some little pieces, like washers, to avoid short-circuit of the electrodes. Therefore, an advantage in respect of other known reactors is their simplicity, leading to fewer costs.

### Description of the invention

The present invention refers to a reactor (1) for electrochemical treatment of biomass **characterized in that** it comprises at least two electrodes (2) having flat parallel faces at the same distance one from the other over the whole surface, wherein the separation distance between the electrodes is less than 1 mm, and wherein the gap between said electrodes is filled with an electrolytic solution.

The electrodes can have different shapes, such as, square, trapezoid, rhomboid, irregular or rectangular.
Preferably, the at least two electrodes have the same shape. Besides, the electrodes are preferably rectangular-shaped. According to particularly preferred embodiments, the electrodes have the same dimensions and more preferably, they have the same shape and the same dimensions.

According to particular embodiments of the invention, the electrodes can be disposed in a sandwich arrangement.

The flat surfaces of the reactor electrodes can also have different textures, such as smooth or rough, preferably rough, and more preferably rough and porous. In an electrochemical process the increase of the surface area improves the kinetics of the process and therefore a rough surface, or a rough and porous surface, offers some advantages. As for a porous surface, the size and the number of pores can vary according to the material supply to the reactor.

A preferred embodiment of the invention consists of a reactor that comprises at least one anode and at least one cathode, having flat parallel faces, wherein the separation distance between the electrodes is less than 1 mm. It can also comprise multiple alternating anodes and cathodes, wherein the separation distance between two consecutive electrodes is less than 1 mm.

In the reactor of the present invention, it is possible to have a number of "n" electrodes per each n-1 cells.

Particular embodiments of the invention are referred to reactors wherein said electrodes are built of a metal-metal and metal-graphite, preferably metal-graphite combination. Some examples of the electrodes building materials are, among others: steel, Al, Mg, Bi, C, Cd, Cu, Ni, Ag, Au, Pb, Ti, Mo, Zn, V, Se, Pt and graphite.

Electrodes can be also coated with a material selected from metal oxides and metal alloys, in order to improve their performance. The coating material can be, for example, oxides of Pt, Ru, Ti, Mg, Mo, Va, Ni, Ag, Au, Al, W and metal alloys, such as Pt/Ru, Pt/Ni, Pt/Sn, Pt/Pb, Pt/Tl, Pt/Bi. These elements can be also in alloys, or dissolved forming salts that work as catalytic converters, such as Pd-Al or Zn-Cu. In addition, dissolved ions may be added forming redox pairs that reduce the anodic and cathodic overpotential. A preferred embodiment is a reactor comprising at least one anode and at least one cathode, or at least a cathode having flat faces, disposed in parallel, with a separation distance between the anode and the cathode of less than 1 mm, being the space between them filled with an electrolytic solution, and being the building material of the anode selected from vanadium, silver, gold, nickel, selenium, graphite, platinum galvanized graphite and palladium galvanized graphite. The only separation means between the electrodes arc rings or washers used to prevent short-circuits between the electrodes.

Particularly preferred embodiments of the invention are combinations wherein the anode is built of Pt, Ni, Ag, Au, Pt/Ni, Pt/Ru, Pt/Sn o Pt/B, Ti/Mg graphite or Pt, Ni, Ag, Au, Pt/Ni, Pt/Ru, Pt/Sn or Pt/Bi galvanized graphite.

Additional particular embodiments of the invention particularly preferred are combinations wherein the cathode is built of Pd, Pt, Ni titanium, graphite, Pt galvanized graphite, Pt/Pd galvanized graphite, Pt/Ru galvanized graphite, Pt/Ni galvanized graphite or Pt/Zn galvanized graphite. Additional particular embodiments of the invention even more particularly preferred are combinations wherein the anode is built of graphite, Pt, Ni or Au and the cathode is selected from titanium, Pt, Ni, graphite, Pt galvanized graphite, Pt/Pd galvanized graphite, Pt/Ru galvanized graphite, Pt/Ni galvanized graphite and Pt/Zn galvanized graphite. Other particularly preferred embodiments are those that utilize an anode built of Pt galvanized graphite and a cathode built of Pd.

The separation distance between the electrodes may vary according to the electrolyte and the adjustment of the reactor. Thereby, said separation distance may vary between approximately 0.0001, mm and approximately 1.15 mm, but preferably between 0.01 and 1.10 mm and more preferably, between 0.95 mm and 1.01 mm. In a particularly preferred embodiment, the separation distance between the electrodes is 1 mm.

In the reactor of the invention, the electrodes can be connected in series or in parallel.

The reactor of the present invention does not require any separation means between the electrodes. Therefore, it would not require gas separation membranes either, in case of being interested in obtaining pure gases. For example, in cases when hydrogen and oxygen are obtained as a result of the electrolysis reaction, it is known the danger of managing both gases together in stoichiometric proportions. Therefore, it is clean the advantage of not to require the utilization of said separation membranes.

The electrode sections may vary, for example, between 2.5 mm and 3.5 mm, preferably between 2,7 mm and 3,2 mm. In a particularly preferred embodiment, this section is equal to 3 mm.

According to a preferred embodiment of the reactor, the electrode assemblage takes place as follows: each electrode is inserted in a variable and symmetric number of threaded rods (3) built of an insolating material that is not deteriorated during its performance, for example, polyamide (for temperatures of less than 70°C) ; and it is separated from the next electrode by a separation means (4), such as a washer, built of the same material as the threaded rods and with a cross-section from approximately 0,8 mm to 1,2 mm, preferably of 1 mm. If the adjustment of the reactor so requires, it is possible to dispose several separation means. The separation means prevent short-circuits between the electrodes and they must be the minimum to avoid that the electrodes get in contact between them.

The number of inserted electrodes can be very numerous.
This number is directly linked to the total intensify circulating through the reactor and therefore, to the volume of gas generated.

Once the preferred number of electrodes have been threaded, a fastening means is fixed (5), such as a polyamide tightening nut, by screw, to each of the ends of each rod.

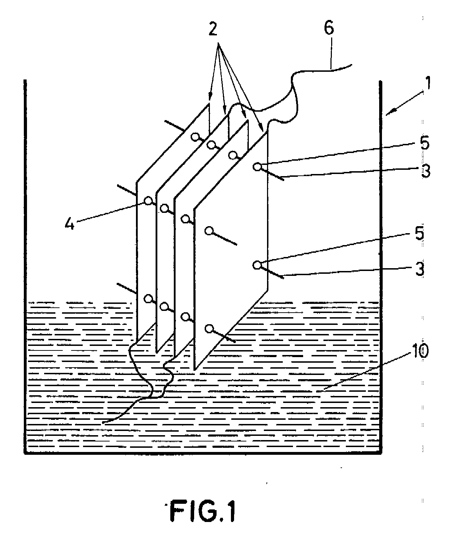

The reactor is placed over a framework or base, built of an insulating material that remains undamaged at the operating conditions, such as polyamide having reparation means with a cross-section between approximately 0,8 mm and 1,2 mm, preferably with a cross-section of about 1 mm. The framework provides rigidity to the whole assembly and, besides, connects the electrodes through their base to the power supply. In figure 1, it can be seen the power supply wires (6).

In the upper base, at the height of the electrodes edge, particularly in the electrodes corners in the case of rectangular electrodes, for example, several combs are assembled, for example, three polyamide combs, in order to provide rigidity to the whole assembly and to connect again the electrodes to the power supply, so that the distribution of current and the drop of potential per surface unit be as much homogeneous as possible.

In the reactor of the present invention, the control system adjusts its complex impedance in real time, by controlling the pH; temperature, additives, such as dissolved oxides, and the concentration of the precursors, such as the polysaccharides concentration -in case the reactor is used for the electro-oxidation of polysaccharides- so that the complex impedance be similar to the impedance of the power supply and, as a result, the energy transfer from the electric power supply to the reactor be maximum.

The building material of the reactor may be any known material suitable for its final use. For example, it can be built of special steels, such as steel with Ti, co, Mo and others, and of high resistance plastic materials, such as aluminium alloys. The inner part of the reactor can be built of materials similar to the previously mentioned ones.

The present invention is also referred to an equipment comprising the previously mentioned reactor. This equipment comprises at least two vessels communicated through communication valves, (7.a), (7.b), normally opened. These two vessels are the reactor vessel and the compensation vessel (9).

The reactor is located inside one of the vessels, the reactor vessel, and the other vessel is used to compensate the internal pressure changes of the gas produced in the reactor. If the gas pressure increases in excess in the reactor vessel, the electrolyte volume in the compensation vessel increases as well, and the reactor electrodes are uncovered, so that the production of gas decreases and the integrity of the reactor is guaranteed.

This is one of the reactor control systems. If this control system is not enough to control the pressure, a device is activated to cut the power supply to the reactor.

The reactor does not touch the bottom of the reactor vessel, but it is anchored to it by means of fixation that are located in the framework.

The reactor vessel is preferably hermetic, and it does not conduct the electric current. The electrolyte flows through the electrodes separation gap driven by at least one pump disposed for that purpose. The reactor vessel is therefore equipped of at least a recirculation pump (11) that recirculates the electrolyte between the reactor electrodes.

The reactor power supply wires leave the reactor, but are anchored to the framework; they are submerged in the electrolyte and they leave to the outside through packing glands.

The reactor vessel is also equipped with means to facilitate the detachment of the bubbles from the electrodes. This means may be, for example, a vibration device or an ultrasounds device, preferably, an ultrasounds device.

The reactor vessel comprises sensors, like at least one temperature sensor (12), at least one pressure sensor (13), at least one pH sensor (14) and at least one Concentration sensor (15). It can also comprise a channel for the evacuation of gasses.

Steady-state operating mode of the reactor: when the reactor operates at a constant tension, temperature, pressure and concentration, then it operates in steady-state regime.

In steady-state regime the used up electrolyte is renewed from the compensation vessel, while the valves (7.a) and (7.b) that communicate both vessels retain closed.

The gas leaves the reactor vessel throughout a regulated electrovalve, a valve for the evacuation of gasses (16), or the previously mentioned channel for the evacuation of gasses.

Periodically, the pumps (11) that recirculate the electrolyte through the reactor electrodes go on to provide fresh solution to the electrodes.

The means used to facilitate the detachment of the bubbles from the electrodes, such as an ultrasound emitter, remain constantly on.

All the reactor variables are controlled and monitorized in real time. If one of the variables gets out of control, the system self-feedbacks and returns to the steady-state regime. If it does not stabilize by itself, the current to the reactor is then cut.

After some hours of operation, the electrolytic solution gets used up and/or the electrodes lose efficacy, they passivate. The reactor control system detects this situation as, at the same tension, the power current decreases. When this happens, the solution is recirculated, the operational tension in steady-state regime is momentarily increased and/or the electrodes polarity is inverted.

The reactor may operate at the following conditions, modifying the reactor building materials:
- from 20°C and atmospheric pressure to 650°C and a pressure of 23 MPa;
- from pH=0 to pH -14.

The reactor of the present invention may be feed in direct current, in sinusoidal pulsed current, or in alternating current.

The reactor may generate several products, pure or in mixtures, such as acids, aldehydes, ketones and combustible gas mixtures, depending on the operating conditions and the biomass to be treated.

In the liquid phase, depending on the selectivity of the operating conditions, it is possible to obtain from organic acids to saturated organic compounds and dissolved carbon.

The over potential varies, depending on the material used as a cathode, between approximately 1.209V and approximately 0.372V for a solution of SO₄H₂ 1M with no stirring and a current density of 1mA/cm² at 26 °C.

Under the same conditions as the ones described in the previous paragraph, but with stirring, the potential varies between approximately 1.001V and approximately 0.357V.

The electrochemical yield of the reactor is given by the quotient between the energy generated by the products and the electric energy needed to produce the same.

The present invention provides some important advantages over the prior art, such as the fact that the electrodes make use of the electric field created in a condenser of parallel flat plates located very close one from another, which allows a flow of high densities of electric current, a low ohmic resistance and, with the appropriate electrolyte, an average supply voltage of less than 0.7V.

Therefore, the present reactor, with low heat losses, obtains a high electrochemical yield, for example, in the generation of oxidation products.

The reactor of the present invention can be used in multiple applications. This reactor may be used for the electro-pyrolysis of biomass, particularly celluloses, polysaccharides dissolved in water and glycerine, in acid means, or in basic means. According to particular embodiments of the invention, the reactor is used in the electro-oxidation of polysaccharides in acid means, and more preferably, in the presence of a charge carrier or an additional electrolyte.

It can be used to carry out biomass electro-oxidation reactions and to generate compounds such as hydrogen, short-chain saturated hydrocarbons or carbonic anhydride. The raw materials for the direct electro-oxidation may be polysaccharides in a water solution.

Further, it can be also used to carry out a direct polysaccharides electro-pyrolysis, particularly to carny out a direct polysaccharides electro-pyrolysis at a minimum potential of less than 0.7 V, either in D.C or in A.C.

It can be used to generate hydrogen by direct electro-oxidation of polysaccharides dissolved in water, or to generate other organic compounds by direct electro-oxidation of polysaccharides dissolved in water.

It can be used to carry out the traditional electrolysis of water, and even to produce electrochemical batteries, such as batteries of polysaccharides, as well as for the treatment of water.

### Brief description of the figures

Figure 1 shows a diagram of the essential elements of the reactor, i.e., the electrodes in the disposition that characterise them.

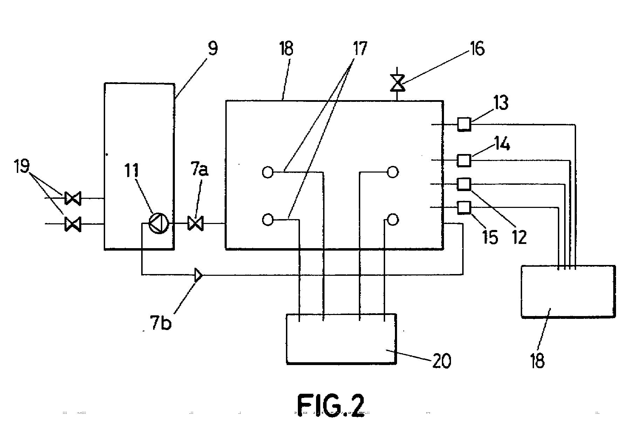

Figure 2 shows a general diagram of an equipment comprising the reactor of the present invention.

### List of references

(1) reactor
(2) electrodes
(3) screw rods
(4) separating element
(5) tightening nuts
(6) power supply wires
(7a) (7.b) communication valves
(8) reactor vessel
(9) compensation vessel
(10) electrolyte
(11) recirculation pump
(12) temperature sensor
(13) pressure sensor
(14) pH sensor
(15) concentration sensor
(16) regulated electrovalve
(17) wires exit
(18) computer system
(19) input-output valves
(20) electric closet

### Examples of embodiments of the invention

### Example 1

A particular reactor according to the invention, appropriate for carrying out electrochemical reactions, particularly, in acid means, using a solution of sulphuric acid and zn sulphate (pH=1), wherein the reactor comprises:
- a graphite anode with a porosity of 25 vol%, and Pt galvanized;
- a graphite cathode with a porosity of 25 vol%, and PtPd galvanized.

### Example 2.- Performance of the reactor

### Use as an electrochemical battery of polysaccharides

The reactor used in this example comprises two electrodes, an anode built of graphite and a cathode built of Zn, both of them of 640 mm², wherein the reactor is built according to what was previously described.

The electrolyte comprises a 1.5M saccharose solution, SO₄H₂ pH=1, 25°C and atmospheric pressure. In these conditions, the cell has a potential of 1.1V.

### Use in direct electro-oxidation of soluble polysaccharides in water solutions

The reactor proposed for this example comprises two graphite electrodes of 640 mm², built according to what was previously disclosed.

The electrolyte comprises a 1.5M saccharose solution, SO₄H₂ pH=1, 25°C and atmospheric pressure.

Under these conditions, the gaseous phase obtained comprises 81% of H₂, 16% CO₂, 4% CH₄, 0% CO and 1% of hydrocarbons with an efficiency of approximately 50%.

Depending on the reactor operating conditions it is possible to obtain between 70% and 99.5% of hydrogen, between 16% and 0% of CO₂; between 5% and 0% of hydrocarbons and between 2% and 0% of CO.

Organic acids are obtained in the liquid phase. If 0.062 grs/100 of Ti⁺⁴ are added to the solution, in order to favour the cathodic autocatalysis, the over potentials decrease. In the case of the previously mentioned cathodes, this decrease is from 0.956V to 0.356V, without stirring, and from 0.925V to 0.344V, with stirring.

## Claims

1. A reactor for the electrochemical treatment of biomass **characterized in that** it comprises at least two flat face electrodes maintaining the same distance between them over their whole surface, wherein the separation distance between said electrodes is less than 1 mm and the gap between the electrodes is filled with an electrolytic solution.

2. A reactor for the electrochemical treatment of biomass, according to claim 1, **characterized in that** at least one of the electrodes is an anode and at least one of them is a cathode.

3. A reactor for the electrochemical treatment of biomass, according to claim 1, **characterized in that** it comprises at least one anode and at least one cathode having flat faces, wherein the separation distance between the anode and the cathode is less than 1 mm.

4. A reactor for the electrochemical treatment of biomass, according to any of the previous claims **characterized in that** it comprises at least two electrodes with a separation between them of less than 1 mm, and wherein said electrodes are built of a metal-metal or metal-graphite combination.

5. A reactor for the electrochemical treatment of biomass, according to any of the claims 1 to 3, **characterized in that** it comprises at least one anode and at least one cathode with a separation distance between the anode and cathode of less than 1 mm, wherein the anode is built of a material selected from vanadium, silver, gold, nickel, selenium, graphite, platinum galvanized graphite and palladium galvanized graphite

6. A reactor, according to any of the claims 1 to 4, **characterized in that** said electrodes are built of a material selected from steel, Al, Mg, Bi, C, Cd, Cu, Ag, Au, Ni, Pb, Ti, Mo, Zn, V, Se, Pt and graphite.

7. A reactor, according to any of the claims 1 to 3, **characterized in that** said electrodes are covered with a material selected from metal oxides and metal alloys

8. A reactor, according to claim 7, **characterized in that** the metal oxides are selected from Pt, Ru, Ti, Mo, Ag, Au, Va, Ni and Al oxides, and the metal alloys are selected from Pt/Ni, Pt/Ru, Pt/Sn, Pt/Zn, Pt/Tl, Pt/Bi and Pt/Pb alloys.

9. A reactor for the electrochemical treatment of biomass, according to claims 1 to 3, **characterized in that** it comprises at least one anode and at least one cathode with a separation distance between said anode and cathode of less than 1 mm, and wherein the anode is made of graphite, Pt, Ni, Au or Pt/Ni, Pt/Ru, Pt/Sn alloys and the cathode is selected from titanium, platinum, nickel, graphite, Pt galvanized graphite, Pt/Pd galvanized graphite, Pt/Ru galvanized graphite, Pt/Ni galvanized graphite, and Pt/Zn galvanized graphite.

10. A reactor for the electrochemical treatment of biomass, according to claim 1, **characterised in that** it comprises at least one anode and at least one cathodes with a separation between said anode and said cathode of less than 1 mm, and wherein the anode is made of Pt galvanized graphite and the cathode is made of Pd.

11. A reactor for the electrochemical treatment of biomass, according to any of the previous claims, wherein the electrodes are connected in series.

12. A reactor for electrochemical treatment of biomass according to any of the claims 1 to 10, **characterized in that** the electrodes are connected in parallel

13. A reactor for the electrochemical treatment of biomass, according to any of the claims 1 to 12, **characterized in that** the electrodes are disposed in a sandwich-like disposition.

14. An equipment for the electrochemical treatment of biomass **characterized in that** it comprises the reactor according to claim 1, wherein said reactor comprises at least two electrodes at the same distance one from the other over their whole surface, with a separation distance between the electrodes of less than 1 mm, and wherein the gap between the electrodes is filled with an electrolytic solution.

15. An equipment for the electrochemical treatment of biomass, according to claim 14, **characterized in that** it comprises at least two vessels, being these vessels a reactor vessel and a compensation vessel.

16. An equipment for the electrochemical treatment of biomass, according to claim 15, **characterized in that** the reactor is not in touch with the bottom of the reactor vessel.

17. An equipment for the electrochemical treatment of biomass, according to claim 15, **characterized in that** the reactor is anchored to the reactor vessel by fixation means disposed in the bottom of the reactor.

18. An equipment for the electrochemical treatment of biomass, according to claim 15, **characterized in that** it comprises at least an electrolytic recirculation pump.

19. An equipment for the electrochemical treatment of biomass, according to claim 15, **characterized in that** the vessels are connected by valves.

20. Use of the reactor according to claim 1, for the electro-oxidation of biomass.

21. Use, according to claim 20, **characterised in that** the biomass contains polysaccharides.

22. Use of the reactor according to claim 1 to carry out a direct electro-pyrolysis of polysaccharides.

23. Use, according to claim 22, to carry out a direct electro-pyrolysis of polysaccharides at a minimum potential of less than 0.7 V.

24. Use, according to claim 22, to carry out a direct electro-pyrolysis of polysaccharides at a minimum potential of less than 0.7 V in alternating current.

25. Use of the reactor according to claim 1, for the production of hydrocarbons by electro-oxidation of polysaccharides.

26. Use of the reactor according to claim 1 for the production of hydrogen.

27. Use of the reactor, according to claim 26, for the production of hydrogen by electro-oxidation of polysaccharides.

28. Use of the reactor according to claim 1 for the production of carbon dioxide by electro-oxidation of polysaccharides.

29. Use, according to claim 20, **characterised in that** the biomass comprises glycerine or celluloses.

30. Use of the reactor according to claim 1 to carry out the electrolysis of water.

31. Use of the reactor according to claim 1 to produce electrochemical batteries.
